# EUROPEAN PATENT APPLICATION

(11) **EP 4 075 733 A1**
(43) Date of publication of application: **19.10.2022**
(21) Application number: 21168303.2
(22) Date of filing: 14.04.2021
(51) Int. Cl.: H04L 12/24, H04W 16/00

(54) **METHOD AND APPARATUS FOR RADIO ACCESS NETWORK PLANNING IN A PRODUCTION ENVIRONMENT**

(71) Applicant: Robert Bosch GmbH, 70442 Stuttgart (DE)
(72) Inventor: Falkner, Stefan, 71272 Renningen (DE); Dietrich, Steven, 89129 Langenau (DE); Ramos Cantor, Oscar Dario, 31135 Hildesheim (DE); Klessig, Henrik, 71272 Renningen (DE)

(57) **Abstract**

There is provided a method comprising: determining (102) a representation of a production environment, wherein the representation comprises at least a plurality of spatial positions associated with a presence of a respective production equipment; determining (104) at least one performance indicator that indicates a performance requirement for reception or transmission of radio signals by at least one of a plurality of radio access nodes or by at least one of a plurality of radio terminals that is associated with the respective production equipment; and propagating (106) the representation and the at least one performance indicator through a machine-trained radio access network configuration model, wherein the representation and the at least one performance indicator are provided at an input section of the machine-trained radio access network configuration model; wherein at least one configuration for a radio access network is provided at an output section of the machine-trained radio access network configuration model; and wherein the at least one configuration of the radio access network comprises at least one or a set of configurations of radio access nodes.

## Description

### State of the art

A wireless network planning process typically consists of four steps as follows: i) specification of the factory floor plan, ii) radio planning, iii) access points deployment, and iv) fine tuning of the access points configuration.

In the first step, a description of the factory floor usage and environment is given including, for instance, machine dimensions and locations, possible trajectories of mobile robots, cable plans and potential candidates for access point locations. In the second step, the network setup is defined, where the number and location of access points is given together with the configuration of their transmission parameters. Examples of these parameters are antenna patterns and directivity, and frequency bands to be used. The third step implies the physical deployment of the access points in the factory floor, with the four step making fine tuning modifications based on local measurements to reach the target requirements.

With respect to the network setup, optimization problems are available in the literature where, typical problem formulations are restricted to a few number of configuration parameters in order to limit the problem's complexity. Moreover, several of these parameters shall have integer values, such that many problems involve mixed-integer linear programing, which does not scale well with the number of parameters. Thus, known solutions often rely on heuristics where only few parameters are jointly considered at the same time. One example of such heuristics for indoor network planning is to choose the antenna configuration first, then the location of the access points is defined and finally, the frequency planning is performed. This process is done in several iterations with increasing level of detail.

### Disclosure of the invention

According to a first aspect of the description a method is provided, the method comprising: determining a representation of a production environment, wherein the representation comprises at least a plurality of spatial positions associated with a presence of a respective production equipment; determining at least one performance indicator that indicates a performance requirement for reception or transmission of radio signals by at least one of a plurality of radio access nodes or by at least one of a plurality of radio terminals that is associated with the respective production equipment; and propagating the representation and the at least one performance indicator through a machine-trained radio access network configuration model, wherein the representation and the at least one performance indicator are provided at an input section of the machine-trained radio access network configuration model; wherein at least one configuration for a radio access network is provided at an output section of the machine-trained radio access network configuration model; and wherein the at least one configuration of the radio access network comprises at least one or a set of configurations of radio access nodes.

The proposed method simplifies the rollout of a radio access network in a production environment while improving the communication characteristics of the radio access network configured with the method.

According to an advantageous example, the machine-trained radio access network configuration model comprises a convolutional neural network.

Advantageously, the Convolutional Neural Network provides that the representation of the production environment can be derived from planning data, which is available from production planning tools.

According to an advantageous example, the convolutional neural network comprises a downsampling section and an upsampling section between the input section and the output section.

Advantageously, the convolutional neural network is enabled to provide map-like data including spatial positions at the output section for deploying the radio access nodes.

According to an advantageous example, the representation comprises a plurality of spatial positions available, in particular in form of areas that are available for deploying the plurality of radio access nodes.

Therefore, the determination of the at least one configuration is constrained by the potential deployment locations of the radio access nodes. This constraint improves the practicability of the proposed configuration determination scheme.

According to an advantageous example, the at least one performance indicator comprises at least one of the following: a minimum or mean signal-to-interference-plus-noise ratio; and the mean or maximum utilized bandwidth.

The provided signal-to-interference-plus-noise ratio advantageously provides that a certain degree of availability of communication with the radio terminals is guaranteed. The provided bandwidth as performance indicator advantageously provides that a system's capacitiy is ensured.

According to an advantageous example, the respective configuration associated with one of the planned radio access nodes comprises at least a spatial position indicator indicating at least one spatial position for deploying the radio access node.

Advantageously, the positions for deploying the respective radio access nodes are provided in order to provide coverage for the radio terminals of the production equipment.

According to an advantageous example, the method comprises: transferring at least a part of the configuration of the radio access network, in particular a/the configuration of a radio access node, in particular at least one uplink radio parameter like uplink channel radio frequency and uplink subcarrier frequency and/or at least one downlink parameter like downlink channel radio frequency and downlink subcarrier frequency, to at least one of the radio access nodes of the radio access network.

Advantageously, the determined configuration of the radio access network is then available and the radio access nodes are ready to be installed. Therefore, manual configuration overhead is reduced and network installation time is reduced.

According to a second aspect of the description, an apparatus is provided, the apparatus comprising: determining means for determining a representation of a production environment, wherein the representation comprises at least a plurality of spatial positions associated with a presence of a respective production equipment; determining means for determining at least one performance indicator that indicates a performance requirement for reception or transmission of radio signals by at least one of a plurality of radio access nodes or by at least one of a plurality of radio terminals that is associated with the respective production equipment; and propagating means for propagating the representation and the at least one performance indicator through a machine-trained radio access network configuration model, wherein the representation and the at least one performance indicator are provided at an input section of the machine-trained radio access network configuration model; wherein at least one configuration for a radio access network is provided at an output section of the machine-trained radio access network configuration model; and wherein the at least one configuration of the radio access network comprises at least one or a set of configurations of radio access nodes.
- Figure 1: schematically depicts a block diagram of an apparatus;
- Figure 2: depicts schematically an exemplary radio access network configuration model;
- Figure 3: depicts schematically a digital representation of a production environment;
- Figure 4: illustrates the result at the output of the model in the form of a configuration; and
- Figure 5: depicts a deployed radio access network comprising the radio access nodes at the production environment.

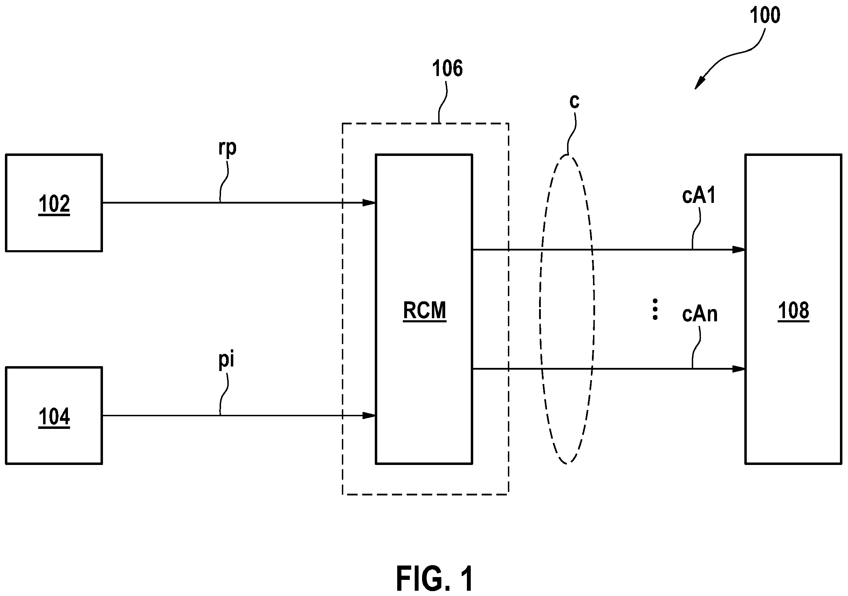

Figure 1 schematically depicts a block diagram of an apparatus 100. The apparatus 100 comprises determining means 102 for determining or providing a multi-dimensional digital representation rp of an indoor production environment. The representation rp comprises at least a plurality of spatial positions associated with a presence of a respective production equipment. The representation rp can be provided, for example, by a factory-planning tool. The spatial positions indicate that there might be multiple radio terminals there.

The apparatus 100 comprises determining means 104 for determining or providing at least one performance indicator pi that indicates a performance requirement for reception or transmission of radio signals by at least one of a plurality of radio access nodes or at least one of a plurality of radio terminals that is associated with and/or part of the respective production equipment.

Keeping in mind that the spatial positions and configurations of the radio access nodes are not known and that the positions and demands of a plurality of radio terminals that are associated with the respective production equipment are known at the time of determining the performance indicator pi, the performance requirement for the reception or transmission of radio signals by the at least one of the plurality of radio access nodes refers to the spatial positions available for the deployment of radio access nodes. Therefore, the performance requirement associated with the at least one access node can be provided in a map-like or image-like manner.

The at least one performance indicator pi specifies a) that there is a radio signal transmission or reception expected to occur at the at least one radio access node or the at least one of a plurality of radio terminals associated with the respective production equipment, and b) the required performance of the radio signal transmission or reception.

According to an example, the at least one performance indicator pi indicates the performance requirement for at least one radio channel or data flow between the at least one of the plurality of radio access nodes and the at least one of the plurality of radio terminals that is associated with and/or part of the respective production equipment. So, according to this example, the performance indicator pi may indicate certain level of performance to a data flow associated with the radio channel.

The apparatus 100 comprises propagating means 106 for propagating the representation rp and the at least one performance indicator pi or a plurality of performance indicators pi through a machine-trained radio access network configuration model RCM, wherein the representation rp and the at least one performance indicator pi are provided at an input section of the machine-trained radio access network configuration model. At least one configuration c for a radio access network is provided at an output section of the machine-trained radio access network configuration model RCM. The at least one configuration c of the radio access network RAN comprises at least one or a set of configurations of radio access nodes.

The apparatus 100 comprises transferring means 108 to transfer at least a part of the configuration c of the radio access network, in particular the configuration of a radio access node, in particular at least one uplink radio parameter like uplink channel radio frequency and uplink subcarrier frequency and/or at least one downlink parameter like downlink channel radio frequency and downlink subcarrier frequency, to at least one of the radio access nodes. According to an example, the configuration of the radio access node comprises at least one configuration parameter like position, UL/DL channels, transmit power, etc. According to the deploying means or transferring means 108, the determined configuration c is used to deploy the radio access network. Deploying the radio access networks includes manual steps like mounting the access points or radio access nodes at the given positions. Deploying the radio access network also includes automatic steps like writing the respective determined configuration like the frequency range to be used to the respective access points or radio access nodes.

The model RCM is either a deterministic or a generative model. The deterministic model will output only one configuration per representation rp and performance indicator pi, while the generative model generates multiple potentially very different configurations c.

Training of the model RCM is done using optimized configurations, so that the model proposes quasi-optimal solutions. This improves the performance compared to the stepwise optimization in the prior art. For this purpose, archived or "randomly generated" production plans in form of representations rp are targeted by means of multi-objective optimization in a simulation.

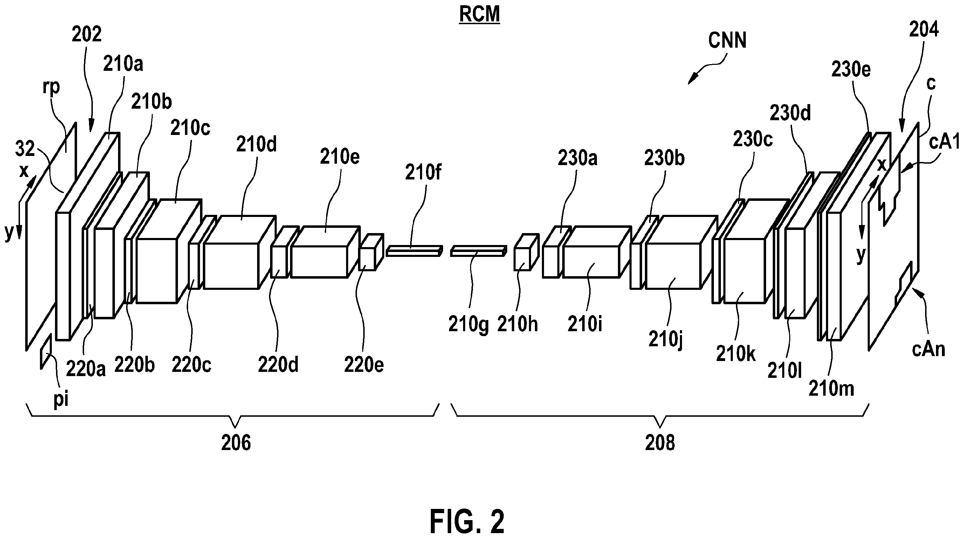

Figure 2 depicts schematically the exemplary radio access network configuration model RCM. Of course, also other structures of the model RCM are possible. The at least one performance indicator pi can be provided - as shown - at the input section 202 as a separate parameter. Alternatively, the performance indicator pi is provided as a separate layer of the representation rp.

The machine-trained radio access network configuration model RCM comprises a convolutional neural network CNN. The convolutional neural network CNN comprises a downsampling section 206 and an upsampling section 208 between the input section 202 and the output section 204.

The network CNN comprises a plurality of convolutional layers 210a-m, pooling layers 220a-e, and up-pooling layers 230a-e. The convolutional layer 210a-m applies a spatial filter to the input image. The spatial filter is shifted successively, wherein the spatial filter has a size smaller than the size of the input image. Spatial filtering is equivalent to a convolutional process. The convolution process extracts a feature amount of the input image. Padding, etc. may be performed in the convolutional layer 210a-m. The convolutional layer 210a-m may also use a plurality of spatial filters in parallel and perform a plurality of spatial filtering steps in parallel on the input image. Using a plurality of spatial filters in parallel increases the image. The number of spatial filters used in parallel in the convolutional layer 210a-m is referred to as the number of channels.

Because of the variable number of machines / production equipment and potential access nodes and their spatial arrangement, the representation rp of the production environment is provided in image-like form to the model RCM. Therefore, the spatial directions xy are represented by pixels of the representation. Here, the different channels of the representation rp represent different objects and their properties. Similarly, the areas in the plan where the radio access points can be placed are marked.

In addition to the representation rp of the environment PEnv, the model RP is provided with a vector of performance indicators pi.

With these inputs, the model RCM directly outputs the spatial positions and configuration of the radio access nodes. This could again be done in image-like form, since the number of APs is variable and their spatial arrangement is thus directly mapped.

The training data for the model RCM consists of representations of different production environments, access point arrangements and associated performance indicators. These can be recorded by means of models, simulations or measurements. To guarantee configurations c with the best possible performance indicators in the training data, we propose to collect them using multi-objective optimization. This ensures that the model can generate quasi-optimal solutions. A promising approach here is genetic algorithms, since they can be applied to complex search spaces with variable dimensionality (here because of the variable number of APs).

The pooling layer 220a-e reduces the size of the image by aggregating a plurality of pixels included in an arbitrary region in the image into a single pixel. For aggregation of a plurality of pixels into a single pixel, average pooling or maximum pooling is performed. In average pooling, an average value of a plurality of pixel values in the region is used for the single pixel. In maximum pooling, the maximum value of a plurality of pixel values in the region is used for the single pixel. A pooling process is performed to reinforce the robustness for translation of a representative value or an average value in the region of interest.

The up-pooling layer 230a-e performs a process opposite to the process in the pooling layer 220a-e. In other words, the size of the image is reduced in the pooling layer 220a-e, but the size of the image is enlarged in the up-pooling layer 230a-e.

According to an example, a plurality of differing suggestions for configuring the radio access nodes in form of a plurality of configurations c are provided by the model RCM being a generative model. The generative model suggests one or more potential configurations c based on the representation rp and the at least one performance indicator pi.

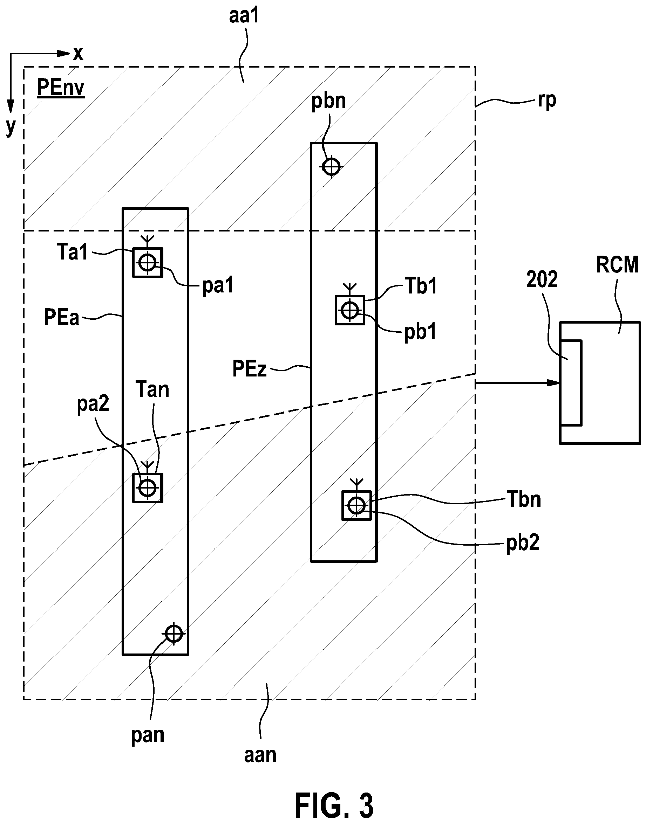

Figure 3 depicts schematically the digital representation rp of the production environment. The representation comprises data representing physical properties of the planned production environment. The exemplary production environment PEnv comprises two stationary production lines as production equipment PEa, PEz. The spatial positions pa1-n, pb1-n of the respective production equipment PEa, PEz are a set of points that lie within the outer contours of the respective production line. Of course, also mobile production environment like moving robots or the like can be represented by defining outer contours of the radius of motion, therefore defining a further plurality of spatial positions associated with a potential presence of a radio terminal Ta1-n, Tb1-n.

The representation rp comprises a plurality of spatial positions available, in particular in form of areas aa1, aan that are available for deploying the plurality of radio access nodes A1, An. Due to building constraints like pipes on the ceiling area, there may be only a part of the production area in form of the areas aa1, aan available for deploying the radio access nodes.

The at least one performance indicator pi comprises at least one of the following:
- a minimum or mean signal-to-interference-plus-noise ratio;
- the mean or maximum bandwidth;
- a minimum or mean data rate;
- a minimum or mean latency of a transmission;
- a minimum or mean spectral efficiency; and
- minimum or mean accuracy of position detection

Of course, other performance indicators pi can also be used. The previous list is not exhaustive.

According to an example, the minimum signal-to-interference-plus-noise ratio is the main performance indicator to be fulfilled for the points of interests, e.g., the radio terminals at the machines of the production equipment, potential trajectories of mobile robots. Additionally, the total used bandwidth is to be fulfilled, which can be calculated from the information of the frequency bands already in use.

The fulfillment of the minimum signal-to-interference-plus-noise ratio can be used to infer the reliability of the communication link. The total used bandwidth gives a reference on the system's ability to support additional users in the future (who could use remaining bandwidth without affecting the current deployment). Moreover, bandwidth is scarce and costly. Thus, its usage should be minimized if possible. As an example, if two solutions are obtained which satisfy the minimum signal-to-interference-plus-noise ratio pi, then the one with the smallest used bandwidth should be preferred in order to reduce costs and/or to enable new devices to be served in the future.

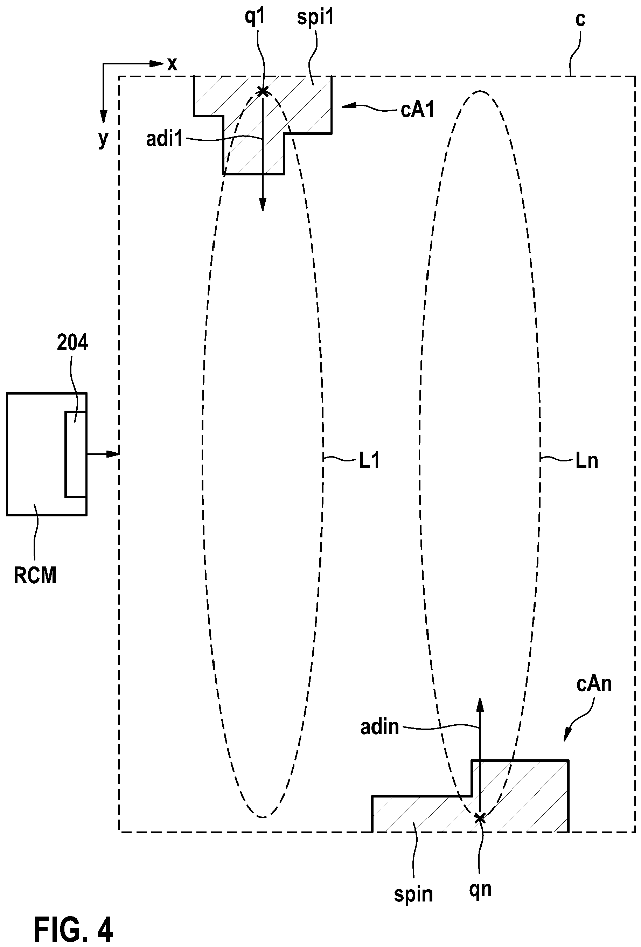

Figure 4 illustrates the result at the output of the RCM model in the form of configuration c, following Figure 3. The configuration c is the starting point for deploying the radio access network comprising a plurality of radio access nodes.

The respective configuration cA1, cAn is associated with one of the planned radio access nodes comprises at least a spatial position indicator spi1, spin indicating at least one spatial position q1, qn for deploying and mounting the radio access node A1, An.

The respective configuration cA1, cAn further comprises at least one of the following: An antenna directivity indicator adi1, adin indicating at least one direction indication a main lobe I1, In of radiation, wherein the antenna directivity indicator adi1, adin is associated with a respective spatial position q1, qn; a radiated power indicator indicating a transmission and/or reception power of the radio access node A1, An; and a frequency band indicator indicating at least one frequency band to be used by the radio access node. According to an example, the frequency bands are configurable per access node, which then results in a frequency plan alongside the spatial deployment plan.

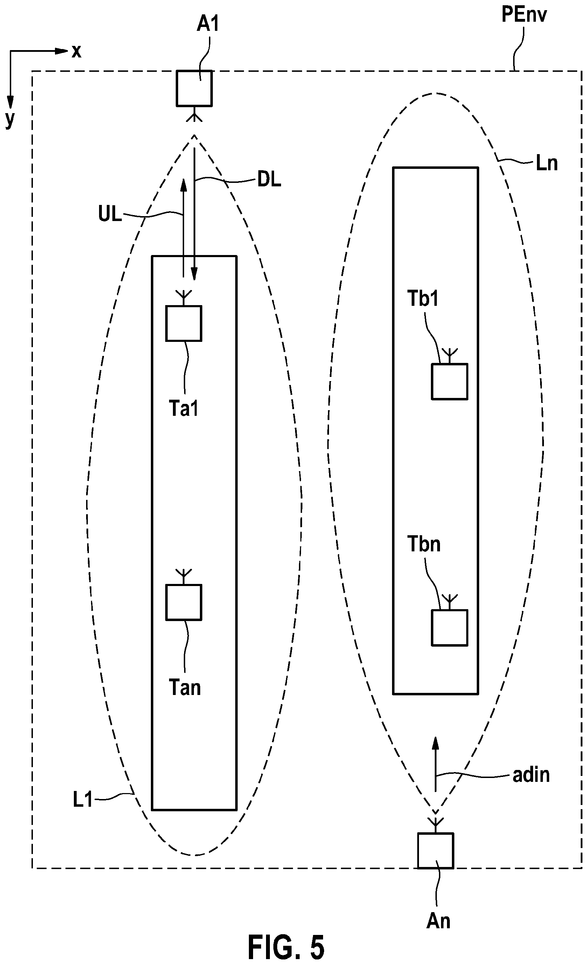

Figure 5 depicts a deployed radio access network comprising the radio access nodes A1, An at the production environment. The radio access network is configured according to the configuration as exemplified in figure 4. Accordingly, the planned production equipment is served by the configured radio access network.

## Claims

1. A method comprising
determining (102) a representation (rp) of a production environment (PEnv), wherein the representation (rp) comprises at least a plurality of spatial positions (pa1-n, pb1-n) associated with a presence of a respective production equipment (PEa; PEz);
determining (104) at least one performance indicator (pi) that indicates a performance requirement for reception or transmission of radio signals by at least one of a plurality of radio access nodes (A1, An) or by at least one of a plurality of radio terminals (Ta1-n, Tb1-n) that is associated with the respective production equipment (PEa; PEz); and
propagating (106) the representation (rp) and the at least one performance indicator (pi) through a machine-trained radio access network configuration model (RCM), wherein the representation (rp) and the at least one performance indicator (pi) are provided at an input section (202) of the machine-trained radio access network configuration model (RCM); wherein at least one configuration (c) for a radio access network is provided at an output section (204) of the machine-trained radio access network configuration model (RCM); and wherein the at least one configuration (c) of the radio access network (RAN) comprises at least one or a set of configurations (cA1; cAn) of radio access nodes (A1, An).

2. The method according to claim 1, wherein the machine-trained radio access network configuration model (RCN) comprises a convolutional neural network (CNN).

3. The method according to claim 2, wherein the convolutional neural network (CNN) comprises a downsampling section (206) and an upsampling section (208) between the input section (202) and the output section (204).

4. The method according to one of the preceding claims, wherein the representation (rp) comprises a plurality of spatial positions available, in particular in form of areas (aa1, aan) that are available for deploying the at least one or a plurality of radio access nodes (A1, An).

5. The method according to claim 1 or 2, wherein the at least one performance indicator (pi) comprises at least one of the following:
a minimum or mean signal-to-interference-plus-noise ratio;
the mean or maximum bandwidth;
a minimum or mean data rate;
a minimum or mean latency of a transmission; and
a minimum or mean spectral efficiency.

6. The method according to one of the preceding claims, wherein the respective configuration (cA1, cAn) associated with one of the planned radio access nodes comprises at least a spatial position indicator (spi1, spin) indicating at least one spatial position (q1, qn) for deploying the radio access node (A1, An).

7. The method according to one of the preceding claims comprising:
transferring (108) at least a part of the configuration (c) of the radio access network, in particular a/the configuration of a radio access node (cA1, cAn), in particular at least one uplink radio parameter like uplink channel radio frequency and uplink subcarrier frequency and/or at least one downlink parameter like downlink channel radio frequency and downlink subcarrier frequency, to at least one of the radio access nodes (A1, An) of the radio access network.

8. An apparatus (100) comprising
determining means (102) for determining a representation (rp) of a production environment (PEnv), wherein the representation (rp) comprises at least a plurality of spatial positions (pa1-n, pb1-n) associated with a presence of a respective production equipment (PEa; PEz);
determining means (104) for determining at least one performance indicator (pi) that indicates a performance requirement for transmission or reception of radio signals by at least one of a plurality of radio access nodes (A1, An) or by at least one of a plurality of radio terminals (Ta1-n, Tb1-n) that is associated with the respective production equipment (PEa; PEz); and
propagating means (106) for propagating the representation (rp) and the at least one performance indicator (pi) through a machine-trained radio access network configuration model (RCM), wherein the representation (rp) and the at least one performance indicator (pi) are provided at an input section (202) of the machine-trained radio access network configuration model (RCM); wherein at least one configuration (c) for a radio access network is provided at an output section (204) of the machine-trained radio access network configuration model (RCM); and wherein the at least one configuration (c) of the radio access network (RAN) comprises at least one or a set of configurations (cA1; cAn) of radio access nodes (A1, An).

9. The apparatus (100) according to claim 8 comprising means to conduct the method according to one of the claims 2 to 7.

10. A use of the method according to one of the claims 1 to 7 or of an apparatus (100) according to claim 8 or 9.
